# EUROPEAN PATENT APPLICATION

(11) **EP 1 557 738 A2**
(43) Date of publication of application: **27.07.2005**
(21) Application number: 05100285.5
(22) Date of filing: 18.01.2005
(51) Int. Cl.: G06F 1/00, H04L 29/06, G06F 17/60, H04N 7/16, H04N 7/173

(54) **Authentication or authorisation using device identifiers**

(30) Priority: 20.01.2004 KR 2004004291
(71) Applicant: SAMSUNG ELECTRONICS CO., LTD., Suwon-City, Kyungki-do 442-742 (KR)
(72) Inventor: SHIN, Su-won, Yeongtong-dong Yeongtong-gu Gyeonggi-do (KR)
(74) Representative: Geary, Stuart Lloyd

(57) **Abstract**

A method for electronic commerce including generating a host ID and a POD ID at a receiving device; transmitting purchase information on a product, the host ID and the POD ID to a service provider to request purchase of the product; determining whether the requested purchase is approved at the service provider by evaluation of the validity of the transmitted host ID and POD ID; and receiving information on whether the requested purchase is approvided or not at the receiving device.
Accordingly, the method for electronic commerce has high security and is convenient to use.

## Description

The present invention relates to a method of authenticating a party and/or authorising an action, the method comprising transmitting ID information, relating to a party to be authenticated or requiring authorisation, to an authentication/authorisation station and to a complementary method of authenticating a party and/or authorising an action, the method comprising receiving ID information, relating to a party to be authenticated or requiring authorisation, at an authentication/authorisation station.

OpenCable is a digital broadcast standard established by a U.S. private standard organization named 'Cable Labs'. The Federal Communications Commission (FCC) has mandated that domestic digital cable broadcasters adopt the OpenCable standard. When digital cable broadcast standards such as OpenCable are instituted, it will be possible to provide a two-way exchange of information and electronic commerce using a television is expected to blossom.

Television home shopping is an example of electronic commerce using television, which combines broadcast and distribution. More specifically, television home shopping directly connects a manufacturer to a user to provide merchandise at a reasonable price, and speedily increase distribution. A growing number of users prefer such a system to traditional in-store shopping.

At least two television home shopping payment methods are known. First, a user may directly telephone a home shopping service provider to provide payment information. Alternatively, the user may transmit payment information via a television which can receive a data broadcast.

In the first method, the user calls a telephone number indicated on a commercial of a home shopping screen to either transmit payment information (*e.g.*, name, address, credit card number) by Automatic Response Service (ARS), or to communicate directly with a telemarketer to transmit the payment information. In contrast, the second method is similar to home shopping using the Internet. Specifically, when connected with a broadcast service provider by a two-way communication telephone line, if the user wishes to purchase a product shown on the television screen, a window appears on the screen to enable the user to input the payment information and to transmit the payment information via a telephone line to a service provider.

However, these conventional methods have drawbacks. The first method, where the user directly telephones a broadcast service provider, has weak security because technology such as wiretapping may intercept the transmission of the payment information, and is also inconvenient to use because payment information has to be indicated every time a purchase is desired.

The second method, where the user inputs payment information on the screen of television, also has weak security, and is also inconvenient to use. Alternatively, if the television is connected via a cable modem to a service provider, rather than via a telephone-line, security can be relatively increased. However, a security program must be installed, and it is more difficult to use such a security program with a television than with a computer, and therefore it is still difficult to maintain security. As another alternative, since it is easier to maintain security and connect to a service provider using a computer (rather than a television), a system that provides home shopping by connecting a television to a computer has also been considered. However, the computer has to be continuously connected to the television to support this method. As an aside, when using a computer, payment information, such as serial number of smart card, can be stored therein. However, the smart card must be kept secure.

In contrast, when using OpenCable, a POD module is inserted into an OpenCable broadcast receiver (e.g. a television) in order to receive normally an OpenCable broadcast. When data is sent to and received from a service provider, a pair of IDs, comprising a unique host ID and a POD ID generated using a high-security method, is used. Accordingly, OpenCable is considered to be efficiently applicable to an electronic commerce method such as a home shopping payment.

A method of authenticating a party and/or authorising an action, comprising transmitting ID information, according to the present invention is characterised in that said ID information comprises IDs of a plurality of interoperative devices.

Preferably, the ID information is transmitted to the authentication/authorisation station from one of said plurality of interoperative devices.

Alternatively, the ID information is transmitted via a speech channel which is independent of said plurality of interoperative devices. The method may in this case include receiving a further ID after transmission of said ID information, making the further ID perceivable to a user and transmission of said further ID via said speech channel.

A method of authenticating a party and/or authorising an action comprising receiving ID information, according to the present invention is characterised by determining whether the received ID information corresponds to a valid set of IDs.

Preferably, the ID information is received in a transmission identified as coming from at least one of said plurality of interoperative devices.

Alternatively, the ID information is received via a speech channel. The method may in this case include transmitting a further ID, after reception of said ID information, directly or indirectly, to one of said plurality of interoperative devices, which is capable of making the further ID perceivable.

The plurality of interoperative devices comprise a host ID and a POD ID, as in the OpenCable standard, or the IDs of equivalent devices in other systems.

Additional, preferred and optional features of the invention are set forth in claims 11 to 27 appended hereto.

Embodiments of the present invention will now be described, by way of example, with reference to the accompanying drawings, in which:
Figure 1 illustrates an Open Cable system,
Figure 2 illustrates a method of sharing a common encryption key for authorization between a host and a POD module,
Figure 3 is a message sequence chart illustrating a method of an electronic commerce according to the present invention,
Figure 4 shows an exemplary payer information database according to the invention, and
Figures 5 to 7 are flowcharts illustrating methods of electronic commerce according to the present invention.

In the following, well-known functions and constructions are not described in detail to avoid obscuring the invention in unnecessary detail.

In the following the implementation of the present invention is described in the context of OpenCable. However, the invention can be implemented in other contexts which involve digital broadcasts that satisfy the conditions described below.

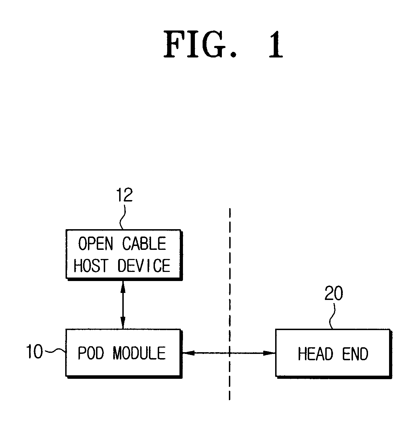

Referring to Figure 1, an OpenCable host device (hereinafter "host") 12 (e.g. a television) for receiving an OpenCable broadcast is established at a home, and a point of deployment (POD) module 10, which acts as a security module, is connected to the host 12. POD module 10 is a cable card provided from a broadcast service provider, and when POD module 10 is connected and has completed certification, the host 12 may normally receive an OpenCable broadcast provided by a broadcast service provider from head end 20.

A conventional device for receiving digital broadcasts receives encrypted content from a transmission system and selectively decrypts the contents to a general image. In OpenCable, the POD module 10 is a separate module which functions as the reception limit device and is provided separately from the host 12. This separation provides a system where the functional features related to a business model of a broadcaster are separated from the receiving device, which allows the receiving device to become available in the market as a generic electronic appliance.

OpenCable can provide one-way and two-way services. The difference between these services is that the two-way service has a return channel and the one-way service has no return channel. If a return channel is not available, data cannot be transmitted from the host 12 to the service provider 20 and users are forced to inform the service provider of necessary information via other appropriate means (e.g. a telephone).

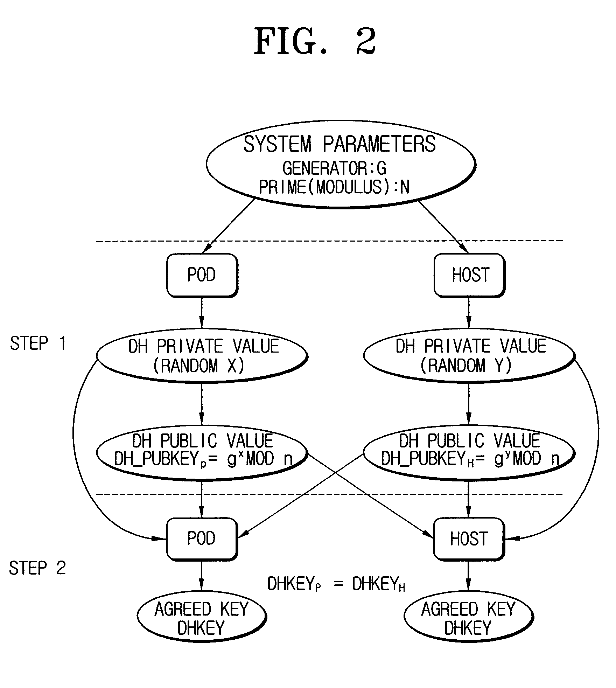

Referring to Figure 2, the POD module 12 and the host 10 each generate a public-private key pair according to system parameters, common to both the POD module 12 and the host 10, set in the factory and locally selected random numbers. The public keys are exchanged between the POD module 12 and the host 10. It is impossible to derive information about the secret keys from the public keys. Therefore, the secret information is not disclosed. In the last stage, host 10 and POD module 12 each calculates the same shared key from its secret key and the public key of the other. As a result, both sides, that is, the host and the POD module can obtain the same DH (Diffie-Hellman) key value. The key value calculated as above is the secret information shared between the host 10 and POD module 12 and the secret information is used as a reference to verify completion of binding between the POD module 12 and the host induced thereafter.

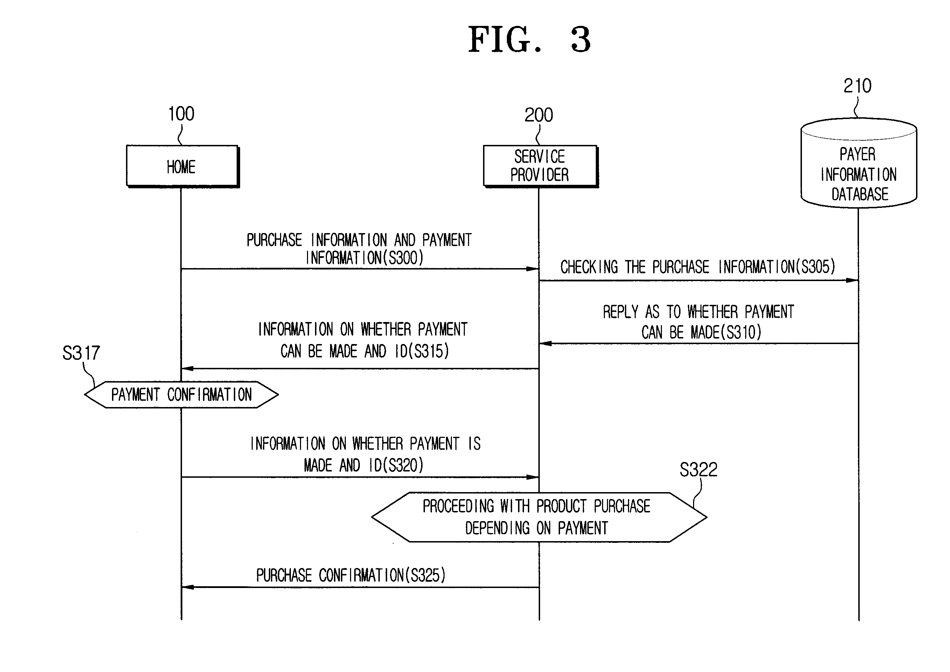

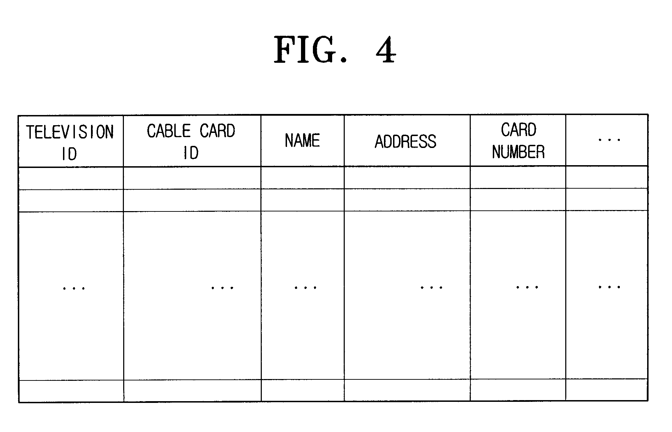

Referring to Figure 3, when a user desires to buy a product while watching a home shopping broadcast from a service provider 200, purchase information such as a product name and quantity and payment information such as the host ID and POD module ID, is transmitted to the service provider from the host 12, which is combined with the POD module 10 at the user's home 100, and verified (S300). The service provider 200 looks up the transmitted payment information through a payer information database 210 (S305), which stores information such as a television ID (host ID), a cable ID (POD ID), a name, an address and a card number, as shown in Figure 4. Accordingly, the service provider 200 can determine whether payment can be made, based on the payment information (S310). The service provider 200 then responds to the home 100, providing information such as ID information for the host 10 and the POD module 12 and whether payment can be made, based on the payment information. A user at home 100 confirms the information from the service provider 200 (S317) and the confirmation is transmitted to the service provider (S320). The service provider 200 then proceeds with processing the product purchase, according to the payment information for the user (S322), and reports confirmation of the purchase (S325). Based on the above process, payment is completed.

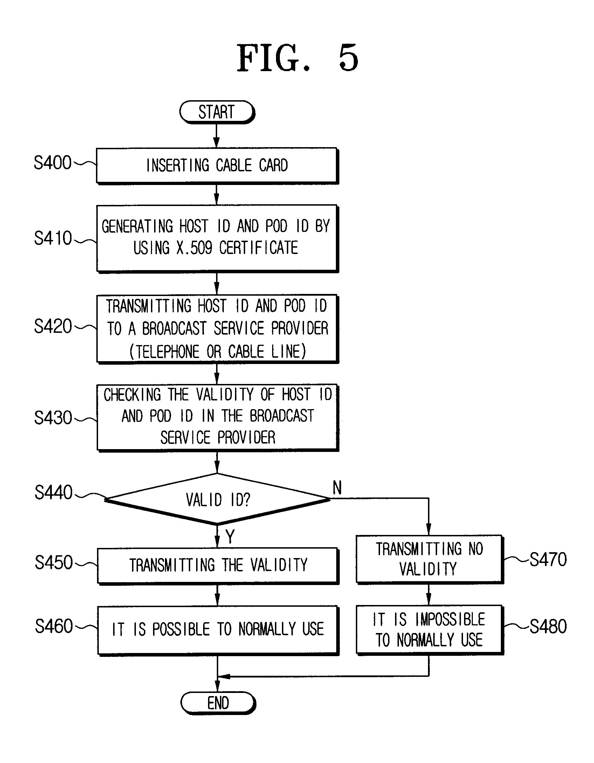

Figures 5 to 7 are flow charts for explaining in detail a method for electronic commerce according to the present invention..

Figure 5 illustrates a certification process, carried out between a service provider and a system containing a host 12 and a POD module 10.

Referring to Figure 5, when a cable card (i.e. a POD module 10), is inserted into a host (e.g. a television) for receiving OpenCable broadcasts (S400), X.509 security certificates are exchanged between the cable card and the television and a host ID and a POD ID are generated (S410). The generated host ID is 40 bits long, the generated POD ID is 64 bits long, and the host ID and POD ID always move as a pair. As seen below, only when the pair of IDs are registered with a broadcast service provider can all the services, provided from the service provider, be used. Once generated, the host ID and the POD ID are transmitted as a pair to the broadcast service provider (S420). If a one-way service is used, the host ID and POD ID have to be separately indicated to the broadcast service provider through a telecommunication medium (e.g. a telephone). If a two-way service is used, the host ID and the POD ID are automatically transmitted to the broadcast service provider through the cable system.

The broadcast service provider then determines the validity of both the host ID and the POD ID (S430). If the IDs are valid, this fact is transmitted to the POD module 10 to enable normal use of the host 12 and POD module 10 (S450, S460). In contrast, if the IDs are not valid, the fact of the validity is not transmitted and the host 12 and POD module 10 cannot be used normally (S470, 480). Accordingly, if, for example, the host 12 or the POD module 10 is not purchased via an authorised route, the successive certification process fails and the OpenCable broadcasts cannot be received.

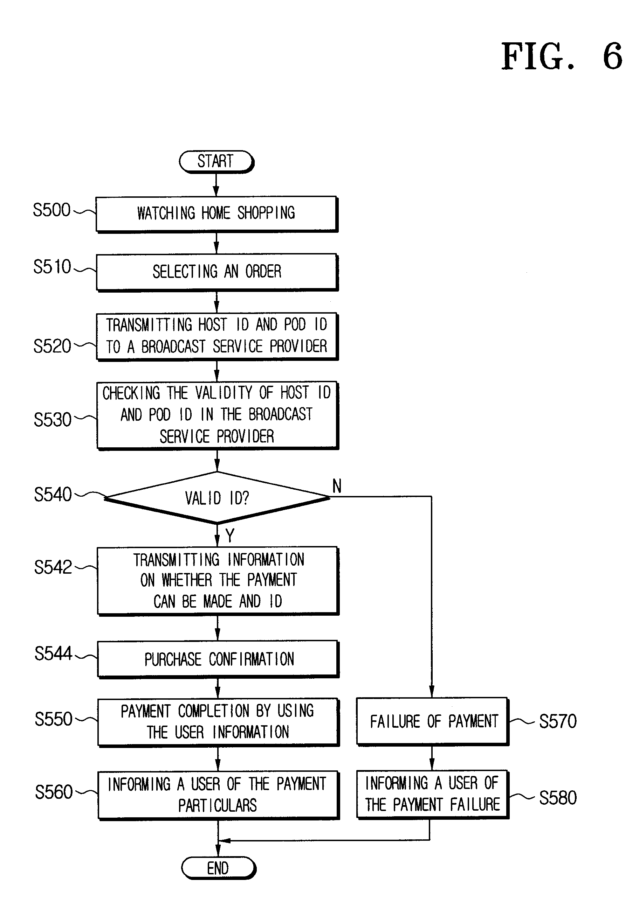

Figure 6 illustrates a method of electronic commerce according to the present invention.

Referring to Figure 6, while a user is watching a home shopping channel through means for receiving OpenCable broadcasts (S500) (e.g. a television), the user selects an order button on the screen of the television (S510), when a product purchase is desired. Then, the name and number of the selected product, a host ID and a POD ID are transmitted to the service provider through a return channel (S520).

The service provider then examines whether the host ID and the POD ID are valid (S530, S540). If the pair is valid, user information corresponding to the ID pair is obtained from the payer information database (see Figure 4). This user information comprises, for example, a name, an address and the card or account number of the user corresponding to the host ID and the POD ID.

The service provider can then confirm that there are no problems related to the product purchase, based on the stored payer information. After this confirmation, the service provider transmits an indication that payment is possible, together with the POD ID and the host ID, to the POD module (S542). This information can only be received by a television having the correct host and POD ID pair. Upon receipt by the POD module, a purchase confirmation screen is shown on the user's television and the user can select a confirmation button on the screen to purchase the product or a cancellation button to cancel the purchase (S544). In the steps above, a unique service ID, corresponding to the purchase, is allocated and after the purchase is confirmed, the service ID, the POD ID and the host ID are transmitted to the service provider. The service provider then uses the received information to complete the payment (S550) and transmits payment particulars to the POD module to inform the user (S560).

In contrast, if the POD ID and the host ID are not valid, the payment fails (S570). The fact of this payment failure is then transmitted to the user (S580).

The service provider stores all of the registered host and POD IDs in pairs and also maintains a certification revocation list ("CRL"). Accordingly, if the user attempts to use an unregistered, revoked or otherwise unusable ID, payment cannot be made. If purchase is impossible because of such a reason (or other reasons such as an insufficient balance in the stored account), information indicating the inability of the user to purchase the product may be transmitted to the POD module 10, along with the corresponding IDs including a service ID, which is a unique number generated at the time of every purchase), so that the information is shown only at the television where the order was made.

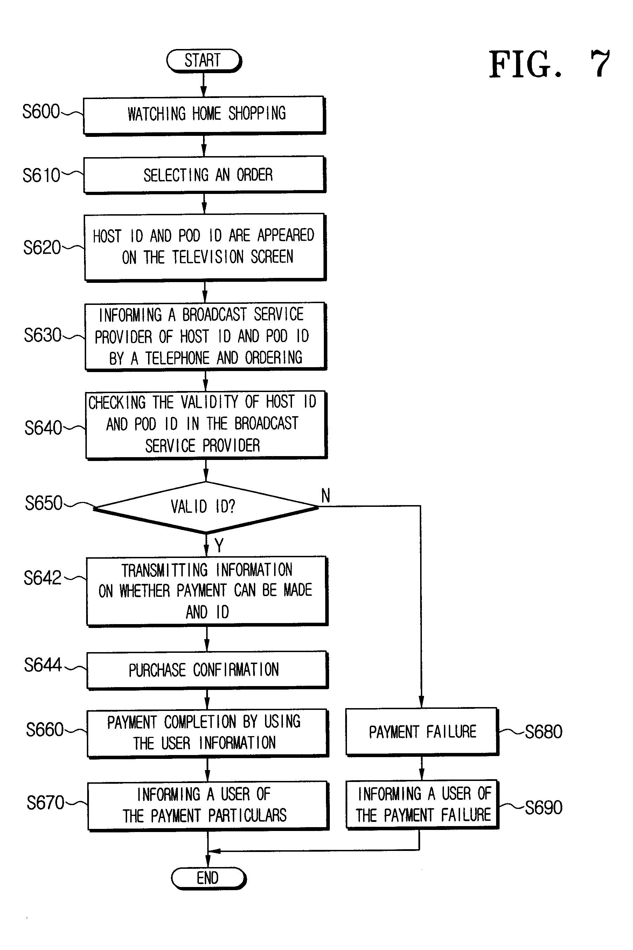

Figure 7 illustrates a method of electronic commerce when a one-way service is used.

As discussed above, in contrast to a two-way system, it is impossible to transmit data from the television to the service provider when using such a one-way service.

Referring to Figure 7, while a user is watching a home shopping channel via a host (e.g. a television) configured to receive OpenCable broadcasts (S600), the user can select an order button on the television screen when a purchase is desired (S610). The corresponding host ID and POD ID are then shown on the television screen (S620), and the user has to call the service provider to inform the service provider of the pair of IDs displayed on the screen (S630).

The service provider then determines whether the host ID and the POD ID are valid (S640, S650). If the pair is valid, the service provider obtains user information that corresponds to the pair of IDs from the payer information database. If the IDs are valid, the service provider transmits purchase ability information to the POD module 10. This purchase ability information is transmitted with the service ID, the POD ID and the host ID so that the information is only shown on the television having the correct IDs (S642). The service ID is then displayed on the user's television and the user can then relay the service ID to the service provider by telephone or other communication means to allow the service provider to confirm the purchase (S644). The service provider then completes the payment transaction (S660) and transmits the payment particulars to the user's television, which are displayed on the television screen to inform the user (S670).

In contrast, if the IDs are not valid, the payment fails (S680), and the service provider informs the user of the payment failure particulars (S690). Similarly, if it is impossible to pay due to an insufficient account balance, the service provider may also transmit this information and the IDs to the user.

In any case, the host ID, the POD ID, and the service ID are all transmitted to show messages on the television of the user attempting a purchase. As described above, in the one-way service (unlike the two-way service), the service ID appears on the screen. The service ID is a unique number, which is generated at every purchase, and which is used to finalize the purchase. If the service ID cannot be seen on the screen, the user's television and/or cable card are considered to be wrong or abnormal. Therefore, the security is increased because, if another user's ID pair is fraudulently used for an attempted purchase, it is impossible for the fraudster to check the information on the television. Thus, it is possible to safely and conveniently use a video service host ID and POD ID for electronic commerce (e.g. a home shopping payment).

As described above, a user can safely and conveniently pay for a home shopping purchase via a host (e.g. a television) using OpenCable. Specifically, since a host ID and a POD ID are always used in a pair, the method is safer than alternative methods using a single ID. Additionally, a user can purchase a product using only a host ID and a POD ID, so that the user's personal information, which is registered with the service provider in conjunction with the host ID and POD ID, is not transmitted via the network.

## Claims

1. A method of authenticating a party and/or authorising an action, the method comprising transmitting ID information, relating to a party to be authenticated or requiring authorisation, to an authentication/authorisation station (20), **characterised in that** said ID information comprises IDs of a plurality of interoperative devices (10, 12).

2. A method according to claim 1, wherein the ID information is transmitted to the authentication/authorisation station (20) from one of said plurality of interoperative devices (10, 12).

3. A method according to claim 1, wherein the ID information is transmitted via a speech channel which is independent of said plurality of interoperative devices (10, 12).

4. A method according to claim 2, including receiving a further ID after transmission of said ID information, making the further ID perceivable to a user and transmission of said further ID via said speech channel.

5. A method according to any preceding claim, wherein the plurality of interoperative devices (10, 12) comprise a host ID and a POD ID.

6. A method of authenticating a party and/or authorising an action, the method comprising receiving ID information, relating to a party to be authenticated or requiring authorisation, at an authentication/authorisation station (20), **characterised by** determining whether the received ID information is a valid set of IDs.

7. A method according to claim 6, wherein the ID information is received in a transmission identified as coming from one at least one of said plurality of interoperative devices.

8. A method according to claim 6, wherein the ID information is received via a speech channel.

9. A method according to claim 8, including transmitting a further ID, after reception of said ID information, directly or indirectly, to one of said plurality of interoperative devices, which is capable of making the further ID perceivable.

10. A method according to any one of claims 6 to 9, wherein the plurality of interoperative devices comprise a host ID and a POD ID.

11. A method for electronic commerce, comprising:
generating a host ID and a POD ID at a receiving device;
transmitting purchase information on a product, the host ID and the POD ID to a service provider to request purchase of the product;
determining whether the requested purchase is approved at the service provider by evaluation of the validity of the transmitted host ID and POD ID; and
receiving information on whether the requested purchase is approved or not at the receiving device.

12. The method for electronic commerce according to claim 1, wherein the information on whether the requested purchase is approved or not comprises the host ID, the POD ID and information on whether a valid method of payment for the product is available.

13. The method for electronic commerce according to claim 1, further comprising transmitting a reply message to the information on whether the requested purchase is approved or not to the service provider.

14. The method for electronic commerce according to claim 3, wherein the reply message is a purchase confirmation.

15. The method for electronic commerce according to claim 3, further comprising completing the requested purchase at the service provider based upon the reply message.

16. The method for electronic commerce according to claim 5, further comprising receiving a confirmation of the completion of the requested purchase at the receiving device.

17. The method for electronic commerce according to claim 1, wherein the service provider maintains a payer information database comprising records of valid host ID and POD ID combinations, and the evaluation of the validity of the transmitted host ID and POD ID comprises comparing the transmitted host ID and POD ID to the valid host ID and POD ID combinations.

18. The method for electronic commerce according to claim 7, wherein the valid host ID and POD ID combinations are respectively linked to payment information.

19. The method for electronic commerce according to claim 8, wherein the payment information comprises a user's name, address and card or account number.

20. The method for electronic commerce according to claim 1, wherein the transmitting of the purchase information comprises transmission by either a telephone report of a user or an automatic transmission via a return channel.

21. The method for electronic commerce according to claim 1, wherein the purchase information comprises a product name or product number.

22. The method for electronic commerce according to claim 1, wherein the method is performed within an open cable system, the receiving device is an open cable receiving device, and the service provider is an open cable service provider.

23. The method for electronic commerce according to claim 1, wherein the receiving device comprises a host for receiving open cable broadcasts and a point of deployment POD module; and the host and the POD module certify each other to generate the host ID and the POD ID.

24. A method for electronic commerce, comprising:
generating a host ID and a security module ID by providing a receiving device comprising a host for receiving broadcasts and a security module which certify each other;
transmitting purchase information on a product, the host ID and the security module ID to a broadcast service provider to request purchase of the product;
determining whether the requested purchase is approved at the broadcast service provider by evaluation of the validity of the transmitted host ID and security module ID; and
receiving information on whether the requested purchase is approved or not at the receiving device.

25. The method for an electronic commerce according to claim 14, wherein the information on whether is the requested purchase is approved or not comprises the host ID, the security module ID and information on whether a valid method of payment for the product is available.

26. The method for an electronic commerce according to claim 14, wherein the broadcast is an open cable broadcast.

27. The method for an electronic commerce according to claim 14, wherein the security module is Point of Deployment POD module.
